# EUROPÄISCHE PATENTSCHRIFT

(11) **EP 1 918 147 B1**
(45) Veröffentlichungstag und Bekanntmachung des Hinweises auf die Patenterteilung: **15.12.2010**
(21) Anmeldenummer: 07021090.1
(22) Anmeldetag: 29.10.2007
(51) Int. Cl.: B60J 7/22

(54) **Windschott und Cabriolet mit einem solchen Windschott**
Wind deflector and convertible with such a wind deflector
Déflecteur de vent et cabriolet avec un déflecteur de vent de ce type

(30) Priorität: 04.11.2006 DE 102006052096
(43) Veröffentlichungstag der Anmeldung: 07.05.2008
(73) Patentinhaber: Dr. Ing. h.c. F. Porsche AG, 70435 Stuttgart (DE)
(72) Erfinder: Froeschle, Mathias, 73760 Ostfildern (DE); Lorenz, Florian, 22359 Hamburg (DE)

(56) Entgegenhaltungen:
- EP-A- 0 887 217
- EP-A- 1 514 714
- EP-A- 1 736 342
- DE-A1- 4 119 529
- DE-C1- 19 725 217

## Beschreibung

Die vorliegende Erfindung betrifft ein Windschott gemäß dem Oberbegriff des Anspruchs 1 und ein Cabriolet mit einem solchen Windschott.

Aus der EP 887 217 A2 ist ein solches Windschott und Cabriolet bekannt. Es umfasst ein Betätigungsmittel zum Betätigen des Windschotts, um dieses zwischen einer Wirkstellung und Ruhestellung verstellen zu können. Das Betätigungsmittel umfasst ein Gestänge, das auf die Seitenteile des Windschotts wirkt. Das Windschott besitzt ferner zwischen den Seitenteilen ein Mittelteil, das zwischen den Seitenteilen in Wirkstellung aufgespannt ist. Durch die direkte Verbindung zwischen den Seitenteilen und dem Mittelteil ist dieses Mittelteil auch an die Seitenteile gekoppelt. Das Mittelteil ist netzartig ausgebildet und besitzt ein oberes Element, das flexibel und zusammenfaltbar ausgeführt ist.

Aus der DE 197 05 682 A1 sind ein Windschott und ein Cabriolet bekannt. Das bekannte Windschott weist einen Mittelteil auf, an dem zwei Seitenteile angeordnet sind. Die beiden Seitenteile können fest an dem Mittelteil angeformt oder klappbar mit diesem verbunden sein. Das Windschott kann zusammen mit Kopfstützen des Cabriolets aus einer versenkten Position in eine hochgefahrene Position gebracht werden. Dazu sind die Kopfstützen an dem Windschott befestigt.

Aus der US 2002/0041111 A1 sind ein Windschott und ein Cabriolet bekannt, das einen Mittelteil aufweist, an dem zwei Seitenteile angebracht sind, die in vorgegebene Positionen klappbar sind. In einer ersten Position können die Seitenteile in Querrichtung des Cabriolets nach außen geklappt werden, so dass sie zusammen mit dem Mittelteil in einer Ebene liegen. In einer zweiten Position sind die Seitenteile gegenüber dem Mittelteil nach vorne geklappt. In einer dritten Position sind die Seitenteile eingeklappt und liegen parallel zu dem Mittelteil.

Es ist die Aufgabe der vorliegenden Erfindung, ein Betätigen eines Windschotts der eingangs genannten Art auf technisch einfache Weise zu ermöglichen, um es zwischen einer Wirkstellung, in der es aufgestellt ist und einen verbesserten Windschutz gewährleistet, und einer Ruhestellung, in der es abgesenkt ist, zu verstellen.

Diese Aufgabe wird gemäß der technischen Lehre des Anspruchs 1 oder des Anspruchs 8 gelöst. Vorteilhafte Ausgestaltungen der Erfindung können den abhängigen Ansprüchen entnommen werden.

Gemäß Patentanspruch 1 weist das Betätigungsmittel des Windschotts wenigstens ein Gestänge auf. Ein solches Gestänge ist kostengünstig zu realisieren und zu montieren. Ferner lässt sich mittels dem wenigstens einen Gestänge mit wenig Aufwand ein funktionssicheres, kompaktes und leichtes Betätigungsmittel aufbauen. Das wenigstens eine Gestänge ist insbesondere ein bewegliches Gestänge, dessen Position oder Stellung innerhalb des Windschotts veränderbar ist. Das bewegliche Gestänge kann durch sein Bewegen besonders gut zum Übertragen einer Kraft dienen. Das Betätigungsmittel und das Windschott sind vorteilhafterweise so ausgestaltet und angeordnet, dass das Windschott zwischen seiner Ruhe- und seiner Wirkstellung zumindest annähernd vertikal verfahrbar ist. Überdies ist das Windschott mehrteilig ausgestaltet. Es enthält einen Mittelteil und zwei Seitenteile. Der Mittelteil und die Seitenteile weisen Flächengebilde zum Aufspannen von Wirkflächen auf, die zum Gewährleisten des Windschutzes dienen. Die beiden Seitenteile sind dabei mit dem Mittelteil gekoppelt. Durch die mehrteilige Ausgestaltung des Windschotts kann ein besonders guter Windschutz gewährleistet werden. Die Seitenteile sind in der Wirkstellung des Windschotts, in seiner Längsrichtung betrachtet, insbesondere seitlich den beiden Enden des Mittelteils benachbart angeordnet. Durch die Kopplung der beiden Seitenteile mit dem Mittelteil kann ein Betätigen wenigstens eines dieser Teile mittels des Betätigungsmittels auf das andere Teil oder die anderen Teile übertragen werden. Dies ermöglicht insbesondere eine einfache Ausgestaltung des Betätigungsmittels. Erfindungsgemäß ist ein oberes, längliches Rahmenelement des Mittelteils an seinen beiden Enden verfahrbar in als Führungen ausgestalteten Rahmenelementen der zwei Seitenteile geführt. Dadurch kann auf besonders einfache Weise die Kopplung zwischen dem Mittelteil und den Seitenteilen erfolgen. Ferner lässt sich so beim Verfahren des Windschotts von seiner Ruhe- in seine Wirkstellung, oder umgekehrt, eine gute und zuverlässige Übertragung der Verfahrensbewegung, je nach Ausgestaltung des Betätigungsmittels, vom Seitenteil auf den Mittelteil oder vom Mittelteil auf den Seitenteil realisieren. Das erfindungsgemäße Cabriolet weist das erfindungsgemäße Windschott auf.

Besonders vorteilhaft sind die Seitenteile schwenkbar gelagert. Dies ermöglicht ein einfaches Aufstellen und Absenken der Seitenteile. Die Seitenteile führen vorteilhafterweise beim Verfahren des Windschotts zwischen seiner Ruhe- und seiner Wirkstellung eine Rotationsbewegung aus.

Bevorzugt ist der Mittelteil so ausgestaltet und angeordnet, dass er beim Betätigen des Windschotts eine Translationsbewegung ausführt. Dies ermöglicht ein einfaches und kontrolliertes Aufstellen und Absenken des Mittelteils.

Besonders bevorzugt weist das Betätigungsmittel zwei Gestänge auf, die an den beiden Seitenteilen, insbesondere an Rahmenelementen der Seitenteile, angreifen. Das Angreifen der zwei Gestänge an den Seitenteilen gewährleistet vorteilhafterweise eine besonders gute Kraftübertragung beim Betätigen des Windschotts, und damit ein besonders zuverlässiges Aufstellen und Absenken. Die zwei Gestänge sind insbesondere bewegliche Gestänge, über die zum Betätigen des Windschotts besonders gut Kräfte auf die beiden Seitenteile ausgeübt werden können. Durch diese Kräfte können die Seitenteile und über die Kopplungen zwischen den Seitenteilen und dem Mittelteil ebenfalls der Mittelteil verfahren werden.

Bevorzugt ist das wenigstens eine Gestänge mit einem Antrieb zum Bewegen des wenigstens einen Gestänges verbunden. Mit dem Antrieb kann das Windschott über das Betätigen des Gestänges komfortabel und weitgehend automatisch zwischen der Ruhe-und der Wirkstellung verfahren werden.

Besonders bevorzugt sind die beiden Gestänge mittels eines Kopplungsmechanismus miteinander gekoppelt und der Antrieb greift an dem Kopplungsmechanismus an. Dadurch können beide Gestänge mit einem gemeinsamen Antrieb betätigt werden. Dies ist kostengünstig und gewährleistet einen einfachen Aufbau des Windschotts.

Vorteilhafterweise ist der Kopplungsmechanismus in Längsrichtung des Windschotts mittig in dem Windschott angeordnet. Die beiden Gestänge können gleich und das Betätigungsmittel kann insbesondere symmetrisch ausgestaltet sein. Der Aufwand zum Realisieren des Betätigungsmittels und des Antriebs ist begrenzt. Das Betätigen der beiden Seitenteile erfolgt damit in gleicher Weise. Es kann einfachheitshalber ein Übersetzungsverhältnis von 1:1 beim Antreiben der Gestänge eingestellt sein, um ein Aufstellen und Absenken der beiden Seitenteile zu erreichen.

Das erfindungsgemäße Cabriolet weist vorteilhafterweise ein Verdeck auf, das mittels einer Verdeckbetätigung öffen- und schließbar ist. Das Betätigungsmittel des Windschotts ist mit der Verdeckbetätigung gekoppelt. Dadurch kann einfachheitshalber gewährleistet werden, dass das Windschott, und insbesondere seine Seitenteile, beim Betätigen des Verdecks in seiner Ruhestellung ist, um den Weg zum Verfahren des Verdecks zwischen seiner Öffnungs- und seiner Schließstellung freizugeben.

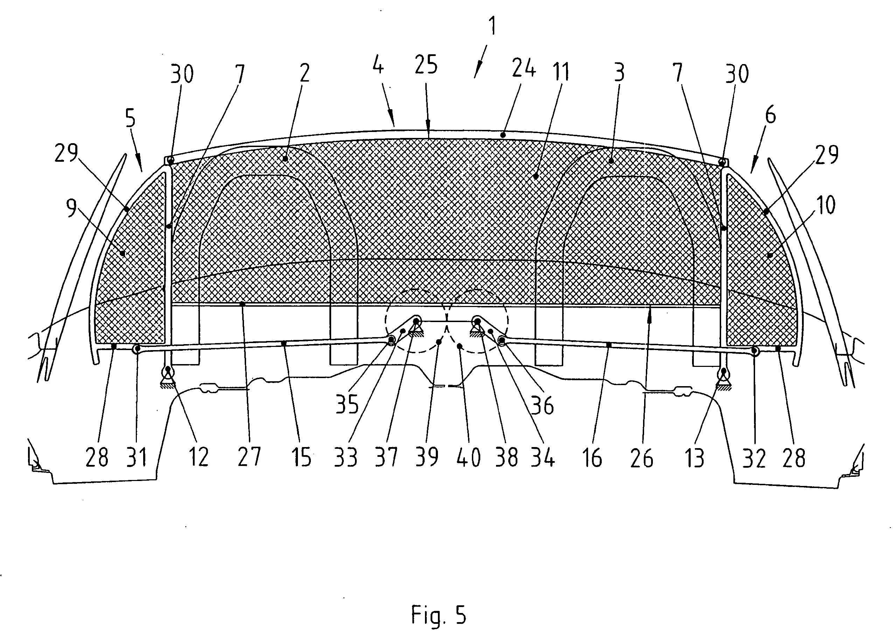

Weitere Vorteile und vorteilhafte Ausgestaltungen der Erfindung ergeben sich aus der folgenden Beschreibung anhand des zweiten Ausführungsbeispiels unter Bezugnahme auf die beigefügten Zeichnungen. Lediglich das in den Figuren 5 bis 8 gezeigte zweite Ausführungsbeispiel ist von dem Patentanspruch 1 umfasst. Es zeigen:
- Fig. 1: eine schematische Darstellung eines ersten Ausführungsbeispiels eines in einer Wirkstellung befindlichen, mehrteiligen Windschotts mit einem an Rahmenelementen zweier Seitenteile befestigten Flächengebilde eines Mittelteils,
- Fig. 2: eine schematische Darstellung des Windschotts nach Fig. 1, das sich in einer Zwischenstellung zwischen seiner Wirk- und einer Ruhestellung befindet,
- Fig. 3: eine schematische Darstellung des Windschotts nach Fig. 2 mit eingezeichneten Flächengebilden der Seitenteile und des Mittelteils,
- Fig. 4: eine schematische Darstellung des Windschotts nach Fig. 1, das sich in seiner Ruhestellung befindet,
- Fig. 5: eine schematische Darstellung eines zweiten Ausführungsbeispiels eines erfindungsgemäßen, in einer Wirkstellung befindlichen, mehrteiligen Windschotts mit einem Mittelteil, das ein oberes, längliches Rahmenelement aufweist, das an seinen beiden Enden verfahrbar in als Führungen ausgestalteten Rahmenelementen von zwei Seitenteilen geführt ist,
- Fig. 6: eine schematische Darstellung des Windschotts nach Fig. 5, das sich in einer Zwischenstellung zwischen seiner Wirk- und einer Ruhestellung befindet,
- Fig. 7: eine schematische Darstellung des Windschotts nach Fig. 6 mit eingezeichneten Flächengebilden,
- Fig. 8: eine schematische Darstellung des Windschotts nach Fig. 5, das sich in seiner Ruhestellung befindet,
- Fig. 9: eine schematische Darstellung eines dritten Ausführungsbeispiels eines in einer Wirkstellung befindlichen, mehrteiligen Windschotts mit einer ersten Ausführung von Lenkern, die die beiden Seitenteile mit dem Mittelteil koppeln, wobei die Lenker drehbar sowohl an Rahmenelementen der beiden Seitenteile als auch an einem Rahmenelement des Mittelteils befestigt sind,
- Fig. 10: eine schematische Darstellung des Windschotts nach Fig. 9, das sich in einer Zwischenstellung zwischen seiner Wirk- und einer Ruhestellung befindet,
- Fig. 11: eine schematische Darstellung des Windschotts nach Fig. 10 mit eingezeichneten Flächengebilden,
- Fig. 12: eine schematische Darstellung des Windschotts nach Fig. 9, das sich in seiner Ruhestellung befindet,
- Fig. 13: eine schematische Darstellung des Windschotts nach Fig. 12 mit eingezeichneten Flächengebilden,
- Fig. 14: eine schematische Darstellung eines vierten Ausführungsbeispiels eines in einer Wirkstellung befindlichen, mehrteiligen Windschotts mit einer zweiten Ausführung von Lenkern, die die beiden Seitenteile mit dem Mittelteil koppeln, wobei die Lenker im Vergleich zum dritten Ausführungsbeispiel nicht im Sichtbereich liegen,
- Fig. 15: eine schematische Darstellung des Windschotts nach Fig. 14, das sich in einer Zwischenstellung zwischen seiner Wirk- und einer Ruhestellung befindet,
- Fig. 16: eine schematische Darstellung des Windschotts nach Fig. 15 mit eingezeichneten Flächengebilden,
- Fig. 17: eine schematische Darstellung des Windschotts nach Fig. 14, das sich in seiner Ruhestellung befindet,
- Fig. 18: eine schematische Darstellung des Windschotts nach Fig. 17 mit eingezeichneten Flächengebilden,
- Fig. 19: eine schematische Darstellung eines fünften Ausführungsbeispiels eines in einer Wirkstellung befindlichen, mehrteiligen Windschotts mit einer dritten Ausführung von Lenkern, die die beiden Seitenteile mit dem Mittelteil koppeln, wobei im Vergleich zu dem dritten und vierten Ausführungsbeispiel keine Führung in vertikaler Richtung erforderlich ist,
- Fig. 20: eine schematische Darstellung des Windschotts nach Fig. 19 mit eingezeichneten Flächengebilden,
- Fig. 21: eine schematische Darstellung des Windschotts nach Fig. 19, das sich in einer Zwischenstellung zwischen seiner Wirk- und einer Ruhestellung befindet, und
- Fig. 22: eine schematische Darstellung des Windschotts nach Fig. 14, das sich in seiner Ruhestellung befindet.

Im Folgenden werden für gleiche oder gleichwirkende Elemente gleiche Bezugszeichen verwendet.

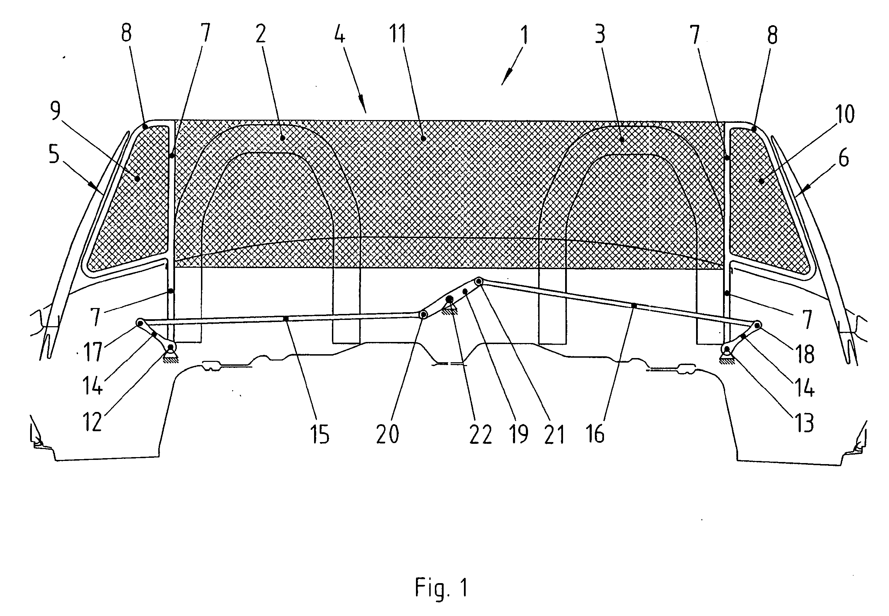

Fig. 1 zeigt eine schematische Darstellung eines ersten Ausführungsbeispiels eines Windschotts 1 für ein Cabriolet. Das Cabriolet ist hier ein zweisitziger, so genannter Roadster. Das Cabriolet weist zwei den Sitzen zugeordnete Überrollbügel 2 und 3 auf. Das Windschott 1 ist hier in Längsrichtung des Cabriolets hinter den Überrollbügeln 2, 3 angeordnet. Es ist aber ebenso möglich, das Windschott 1 in Längsrichtung des Cabriolets vor den Überrollbügeln 2, 3 anzuordnen. Das Windschott 1 erstreckt sich in Querrichtung des Cabriolets, so dass die Längsrichtung des Windschotts 1 senkrecht zu der Längsrichtung des Cabriolets verläuft. Das Windschott 1 befindet sich in der Fig. 1 in einer Wirkstellung, in der es als Windschutz für in einem Passagierraum des Cabriolets befindliche Passagiere dient. In seiner Wirkstellung ist das Windschott 1 aufgestellt, so dass es hinter den Überrollbügeln 2, 3 Wirkflächen zum Gewährleisten des Windschutzes aufspannt. Das Windschott 1 ist ein mehrteiliges Windschott 1, das einen Mittelteil 4 und zwei Seitenteile 5 und 6 aufweist, die in der Wirkstellung des Windschotts 1, in seiner Längsrichtung betrachtet, zu beiden Seiten des Mittelteils 4 angeordnet sind. Die Seitenteile 5, 6 haben Rahmen, die als Rahmenelemente gerade Holme 7 und an den Holmen 7 angebrachte, in Längsrichtung des Windschotts 1 nach außen weisende, gebogene Außenbügel 8 aufweisen. Die Holme 7 verlaufen in der Wirkstellung des Windschotts 1 vertikal nach oben. Die Außenbügel 8 sind so gebogen und an den Holmen 7 angebracht, dass die Seitenteile 5 und 6 Wirkflächen 9 bzw. 10 haben, die in etwa dreieckförmig sind, wobei die Ecken der Wirkflächen 9, 10 allerdings gerundet sind. Die Wirkflächen 9, 10 werden durch Flächengebilde aufgespannt, die hier aus netzförmigen Stoffen gebildet und an den Rahmenelementen 7, 8 befestigt sind. Die Rahmen der Seitenteile 5, 6 sind somit fest mit den netzförmigen Stoffen bespannt. Es ist ebenso möglich, die Wirkflächen 9, 10 in Kunststoff oder in Glas, insbesondere Mineralglas, auszuführen. An den in Längsrichtung des Windschotts 1 nach innen weisenden Seiten der Holme 7 der beiden Seitenteile 5, 6 sind Enden eines weiteren Flächengebildes befestigt, das eine Wirkfläche 11 aufspannt. Die Wirkfläche 11 bildet im vorliegenden Ausführungsbeispiel den Mittelteil 4 des Windschotts 1 und erstreckt sich in Längsrichtung des Windschotts 1 zwischen den Holmen 7 der beiden Seitenteile 5, 6. Das die Wirkfläche 11 aufspannende Flächengebilde ist hier aus einem insbesondere hochelastischen, netzförmigen Stoff gebildet. Die Wirkflächen 9-11 und die sie aufspannenden Flächengebilde sind in der Fig. 1 durch netzförmige Schraffuren kenntlich gemacht.

Die Holme 7 der beiden Seitenteile 5, 6 sind an ihren unteren Enden schwenkbar und ortsfest an einer Karosserie des Cabriolets gelagert. Die Lagerung und Anordnung der Holme 7 ist dabei so ausgestaltet, dass sie ausgehend von ihren aufrechten Positionen in der Wirkstellung des Windschotts 1 in seiner Längsrichtung nach innen verschwenkbar sind. Schwenkachsen, um die die Holme 7 verschwenkbar sind, verlaufen somit in Längsrichtung des Cabriolets. Dadurch sind Drehpunkte 12 und 13 der Seitenteile 5 bzw. 6 ausgebildet. An den unteren Enden der Holme 7 der beiden Seitenteile 5, 6 sind an den Drehpunkten 12, 13 untere Enden von länglichen Kopplungsgliedern 14 angebracht, die in der Wirkstellung des Windschotts 1 schräg nach oben und in Längsrichtung des Windschotts 1 nach außen verlaufen. Zwischen den Holmen 7 und den Kopplungsgliedern 14 sind Winkel von in etwa 45° ausgebildet. An oberen Enden der Kopplungsglieder 14 sind äußere Enden von Gestängen 15 und 16 drehbar angeordnet. Das Gestänge 15 ist an dem Kopplungsglied 14 des Seitenteils 5 und das Gestänge 16 an dem Kopplungsglied 14 des Seitenteils 6 angeordnet. Dadurch sind Drehpunkte 17 und 18 der Gestänge 15 bzw. 16 ausgebildet. Die Gestänge 15, 16 verlaufen in Längsrichtung des Windschotts 1 von der Ankopplung in den Drehpunkten 17, 18 an die Kopplungsglieder 14 nach innen, insbesondere bis annähernd zur Mitte des Windschotts 1. Innere Enden der Gestänge 15, 16 sind über ein längliches Antriebsglied 19 miteinander verbunden. Das innere Ende des Gestänges 15 ist dabei drehbar an einem Drehpunkt 20 mit einem Ende des Antriebsglieds 19 und das innere Ende des Gestänges 16 drehbar an einem Drehpunkt 21 mit einem anderen Ende des Antriebsglieds 19 verbunden. Das Antriebsglied 19 ist in seiner Mitte drehbar in einem Drehpunkt 22 und ortsfest an der Karosserie des Cabriolets gelagert. Der Drehpunkt 22 liegt in Längsrichtung des Windschotts 1 in etwa in dessen Mitte. An dem Drehpunkt 22 greift in der Mitte des Antriebsglieds 19 ein Antrieb an, mit dem das Antriebsglied um ca. 90° gedreht werden kann. Der Antrieb kann beispielsweise ein Elektroantrieb mit einem Elektromotor oder ein hydraulischer Antrieb sein. Es ist auch möglich, das Antriebsglied 19 manuell zu drehen. Dazu kann an dem Antriebsglied 19 ein geeigneter Griff ausgebildet sein.

In der Darstellung der Wirkstellung des Windschotts 1 nach Fig. 1 verläuft das Antriebsglied 19 schräg von links unten nach rechts oben und bildet dabei einen Winkel von ca. 45° zur Vertikalen. Ausgehend von der Wirkstellung des Windschotts 1 können die den Seitenteilen 5, 6 zugeordneten Gestänge 15, 16 nach innen, in Richtung des jeweils anderen Seitenteils 5, 6 gezogen werden. Die Gestänge 15, 16 sind somit beweglich und in Längsrichtung des Windschotts 1 verschiebbar. Zum Verschieben der Gestänge 15, 16 wird das Antriebsglied 19 entgegen dem Uhrzeigersinn gedreht. Die Drehbewegung des Antriebsglieds 19 überträgt sich auf die Gestänge 15, 16, auf die dadurch Zugkräfte nach innen ausgeübt werden. Diese Zugkräfte werden über die Kopplungsglieder 14, die dadurch nach innen, in Richtung des Antriebsglieds 19 gedreht werden, auf die Holme 7 der Seitenteile 5, 6 übertragen, so dass diese in Längsrichtung des Windschotts 1 nach innen verschwenkt werden. Das Verschwenken der Seitenteile 5, 6 erfolgt in einer Ebene des Windschotts 1, die durch seine Längsrichtung und die Vertikale aufgespannt wird. Durch das Verschwenken der Seitenteile 5, 6 wird das Windschott 1 von seiner aufgestellten Wirkstellung in eine abgesenkte Ruhestellung gebracht, indem es nach unten in Richtung einer Gürtellinie des Cabriolets verfahren wird. In der Ruhestellung spannt das Windschott 1 im Wesentlichen keine oder nur kleine Wirkflächen auf und gewährleistet somit keinen oder einen nur geringen Windschutz. Zwischen der Wirk- und der Ruhestellung kann das Windschott 1 Zwischenstellungen einnehmen. Das Antriebsglied 19, die Gestänge 15, 16 und die Kopplungsglieder 14 sind hier als Teile eines Betätigungsmittels anzusehen, mit dem das Windschott 1 betätigbar ist, um es ausgehend von der Ruhestellung in die Wirkstellung aufzustellen, um es ausgehend von der Wirkstellung in die Ruhestellung abzusenken und um es in eine beliebige Zwischenstellung zwischen der Ruhe- und der Wirkstellung zu bringen. Vorteilhafterweise ist das Windschott 1, und insbesondere sein Antrieb, so ausgestaltet, dass es nur in die Ruhe- und die Wirkstellung verfahren werden kann. Die Zwischenstellungen sind daher nur Übergangsstellungen und nicht als feste Stellungen einstellbar.

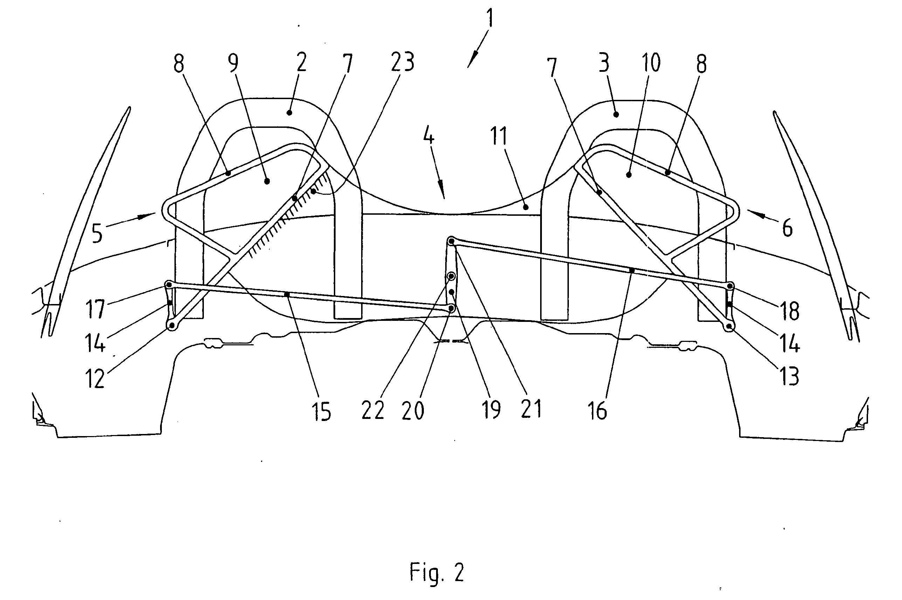

Fig. 2 zeigt eine schematische Darstellung des Windschotts 1 in einer solchen Zwischenstellung zwischen seiner Wirk- und Ruhestellung. Die die Wirkflächen 9-11 und die Flächengebilde kenntlich machenden Schraffuren sind in der Fig. 2 aus Übersichtlichkeitsgründen weggelassen. Das Antriebsglied 19 wurde um ca. 45° gegen den Uhrzeigersinn gedreht und verläuft hier nahezu vertikal. Die Drehung des Antriebsglieds 19 hat sich über die Gestänge 15, 16 und die Kopplungsglieder 14 auf die Seitenteile 5, 6 übertragen. Die beiden Seitenteile 5, 6 sind in der Zwischenstellung nach Fig. 2 nach innen verschwenkt. Das flexible Flächengebilde des Mittelteils 4 bewegt sich mit der Bewegung der Seitenteile 5, 6 ebenfalls nach unten. Das flexible Flächengebilde des Mittelteils 4 fällt quasi in sich zusammen. Die Befestigung des Flächengebildes des Mittelteils 4 an den nach innen weisenden Seiten der Holme 7 ist in der Fig. 2 durch eine Schraffur 23 kenntlich gemacht.

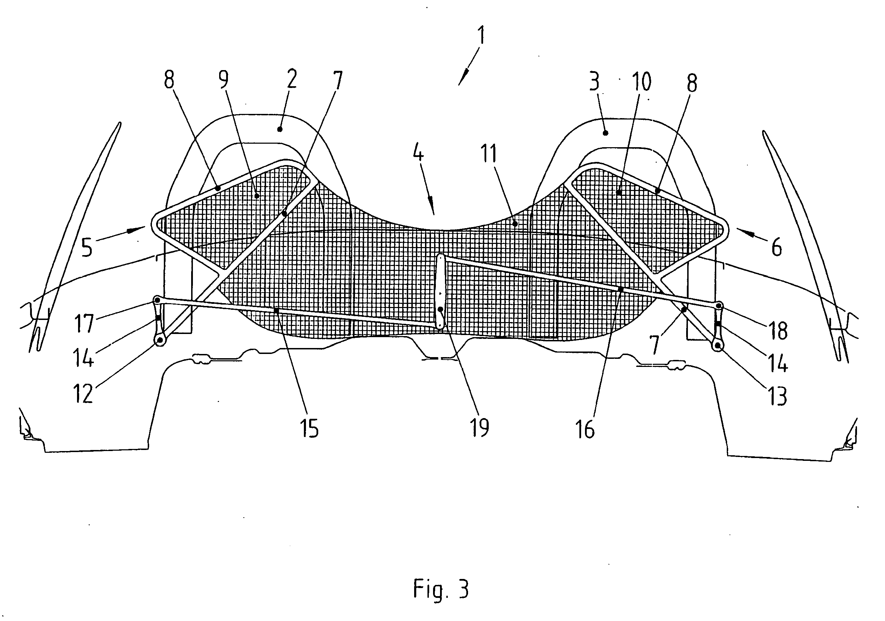

Fig. 3 zeigt eine schematische Darstellung des Windschotts 1 in der Zwischenstellung nach Fig. 2. In der Fig. 3 sind die Schraffuren der Flächengebilde der Seitenteile 5, 6 und des Mittelteils 4 eingezeichnet. Es ist deutlich das Durchhängen des Flächengebildes des Mittelteils 4 zu sehen. An der unteren Kante des Flächengebildes des Mittelteils 4 liegt das Flächengebilde auf der Gürtellinie der Karosserie des Cabriolets auf. Das Flächengebilde des Mittelteils 4 staut sich ein wenig in seinem unteren Bereich.

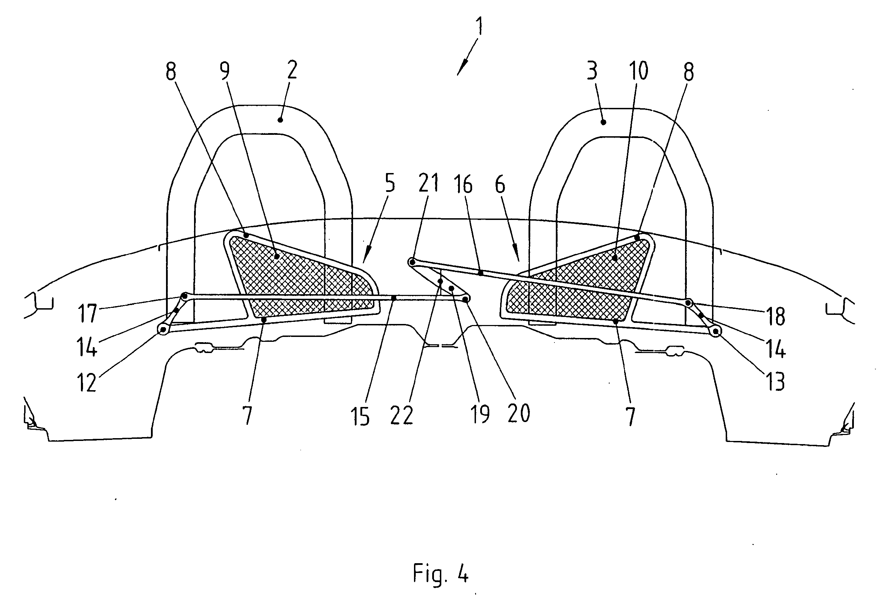

Fig. 4 zeigt eine schematische Darstellung des Windschotts 1 nach Fig. 1, das sich hier in seiner Ruhestellung befindet. Das Antriebsglied 19 wurde aus seiner Position nach Fig. 2 weiter gedreht und verläuft nun schräg von rechts unten nach links oben. Es bildet zu der Vertikalen einen Winkel von ca. 45°. Gegenüber der Wirkstellung wurde das Antriebsglied 19 um ca. 90° gegen den Uhrzeigersinn gedreht, um das Windschott 1 in die Ruhestellung zu bringen. Die weitere Drehung des Antriebsglieds 19 wurde über die Gestänge 15, 16 und die Kopplungsglieder 14 auf die Seitenteile 5, 6 übertragen. Die Seitenteile 5, 6 sind vollständig nach unten verschwenkt, so dass die Holme 7 nahezu horizontal verlaufen. Das flexible Flächengebilde des Mittelteils 4 wurde mit der Bewegung der Seitenteile 5, 6 nach unten verfahren und ist in der Ruhestellung des Windschotts 1 nahezu vollständig zusammengefaltet.

In dem anhand der Fig. 1-4 beschriebenen ersten Ausführungsbeispiel wurde eine Bewegung zum Absenken des Windschotts 1 aus seiner Wirkstellung nach Fig. 1 in seine Ruhestellung nach Fig. 4 beschrieben. Es ist mittels eines umgekehrten Antreibens des Antriebsglieds 19 in Richtung des Uhrzeigersinns möglich, das Windschott 1 aus seiner Ruhestellung in seine Wirkstellung aufzustellen. Ferner sind in dem anhand der Fig. 1-4 beschriebenen Ausführungsbeispiel die beiden Gestänge, 15, 16, mit denen die Seitenteile 5, 6 verfahren werden, mit dem gemeinsamen Antriebsglied 19 verbunden. Das Antriebsglied 19 wird zentral mit dem Antrieb angetrieben, dessen Bewegung auf beide Gestänge 15, 16 wirkt. Es ist allerdings ebenso möglich, die beiden Gestänge unabhängig voneinander zu bewegen. Insbesondere können an den Gestängen 15, 16 eigene Antriebe vorgesehen sein. Es ist auch möglich, nur an einer Seite einen Antrieb vorzusehen. Dieser könnte beispielsweise an dem Drehpunkt 12 angreifen. Ferner kann es möglich sein, dass nur ein Gestänge notwendig ist. Beispielsweise kann das Gestänge 15 direkt an dem Drehpunkt 18 angreifen. Dieser ist dann vorzugsweise um 180° verdreht angeordnet.

Fig. 5 zeigt eine schematische Darstellung eines zweiten Ausführungsbeispiels des erfindungsgemäßen, mehrteiligen Windschotts 1. Das Windschott 1 befindet sich in der Darstellung nach Fig. 5 in seiner Wirkstellung und ist insofern hinter den Überrollbügeln 2, 3 aufgestellt. Der Mittelteil 4 des Windschotts 1 weist hier eine obere, längliche Rahmenleiste 24 auf. Die Rahmenleiste 24 ist leicht gebogen und hat eine Wölbung nach oben. An der nach unten weisenden Seite der Rahmenleiste 24 ist eine obere Kante 25 des Flächengebildes des Mittelteils 4 befestigt. Im vorliegenden Ausführungsbeispiel ist der Mittelteil 4 als Rollo ausgestaltet. Eine untere Kante 26 des Flächengebildes des Mittelteils 4 ist dabei an einer drehbar gelagerten Rolloachse 27 befestigt, die ortsfest gelagert ist und horizontal verläuft und mit der sich das Flächengebilde des Mittelteils 4 auf- und abwickeln lässt. Es ist auch möglich, die Rahmenleiste 24 als Rolloachse auszugestalten. Es ist ferner möglich, die untere Kante 26 des Flächengebildes des Mittelteils 4 ortsfest, beispielsweise mit einer Halteleiste, an der Karosserie des Cabriolets zu befestigen. Das Flächengebilde des Mittelteils 4 kann dann besonders elastisch sein, so dass es sowohl im aufgespannten Zustand in der Wirkstellung des Windschotts 1, wie er in der Fig. 5 dargestellt ist, als auch in der Ruhestellung des Windschotts 1 straff ist.

Die Seitenteile 5, 6 haben auch hier einen Rahmen, an dem ihre Flächengebilde die Wirkflächen 9, 10 aufspannen. Die Außenbügel 8 der Seitenteile 5, 6 weisen im vorliegenden Ausführungsbeispiel senkrecht an den Holmen 7, in deren unteren Bereichen angeordnete, nach außen gerichtete, längliche Stege 28 und die Stege 28 und die oberen Enden der Holme 7 verbindende, bogenförmige Rahmenelemente 29 auf. Die Rahmenelemente 29 der beiden Seitenteile sind als Führungen ausgestaltet und weisen Kulissen auf. In diesen Kulissen sind verschiebbare Kulissensteine 30 angeordnet, an denen die Enden der Rahmenleiste 24 befestigt sind. In der Wirkstellung des Windschotts 1 befinden sich die Kulissensteine 30 an den Verbindungspunkten der Holme 7 und der Rahmenelemente 29, d. h. in den oberen Ecken der Rahmen der Seitenteile 5, 6.

Das Betätigungsmittel zum Verfahren des Windschotts 1 zwischen seiner Wirk- und seiner Ruhestellung unterscheidet sich ein wenig von demjenigen gemäß dem ersten Ausführungsbeispiel. Die Gestänge 15, 16 sind mit ihren in Längsrichtung des Windschotts 1 äußeren Enden drehbar an den Stegen 28 der Rahmen der Seitenteile 5, 6 befestigt. Dadurch werden Drehpunkte 31 und 32 gebildet, um die die Gestänge 15 bzw. 16 drehbar sind. Die in Längsrichtung des Windschotts 1 inneren Enden der Gestänge 15, 16 sind drehbar an beweglichen Enden separater länglicher Antriebsglieder 33 und 34 befestigt. Dadurch sind Drehpunkte 35 und 36 gebildet, um die die Gestänge 15 bzw. 16 drehbar sind. Die Antriebsglieder 33, 34 sind an anderen ihrer Enden drehbar und ortsfest, insbesondere an der Karosserie des Cabriolets gelagert. Dadurch sind Drehpunkte 37 und 38 gebildet, um die die Antriebsglieder 33 bzw. 34 drehbar sind. Die Antriebsglieder 33, 34 sind antreibbar, so dass die Drehpunkte 35, 36 auf einem kreisförmigen oder teilkreisförmigen Weg verfahrbar sind. Die Antriebsglieder 33, 34 sind manuell antreibbar. Es ist aber ebenso möglich, sie mit einem automatischen Antrieb, wie z. B. einem Elektroantrieb oder einem hydraulischen Antrieb, anzutreiben. Die Antriebsglieder 33, 34 können unabhängig voneinander, insbesondere mit zwei Antrieben, angetrieben werden. Es ist aber vorteilhafterweise ebenso möglich, beide Antriebsglieder 33, 34 mit einem gemeinsamen Antrieb anzutreiben. Dazu sind die anderen Enden der Antriebsglieder 33 und 34 fest mit drehbar gelagerten, ineinander greifenden Zahnrädern 39 bzw. 40 verbunden. An einem dieser Zahnräder 39, 40 greift dann der Antrieb an. Dadurch können beide Zahnräder 39, 40 gedreht werden. Hier greift der Antrieb an dem Zahnrad 39 an.

Die Drehbewegungen der Zahnräder 39, 40 übertragen sich auf die Antriebsglieder 33, 34, so dass auf die an diese angeschlossenen Gestänge 15, 16 Kräfte ausgeübt werden. Diese Kräfte werden wiederum über die Drehpunkte 31 und 32 auf die Stege 28 der beiden Seitenteile 5, 6 übertragen. Beim Verfahren des Windschotts 1 von der Wirkstellung nach Fig. 5 in die Ruhestellung wird das Zahnrad 39, und damit das an ihm befestigte Antriebsglied 33, entgegen der Richtung des Uhrzeigers angetrieben. Dadurch wird an dem Zahnrad 40, und damit an dem an ihm befestigten Antriebsglied 34, eine Drehung in Richtung des Uhrzeigers erzeugt. Durch das Drehen der Antriebsglieder 33, 34 werden Zugkräfte auf die Gestänge 15, 16 ausgeübt, so dass sich diese in der Längsrichtung des Windschotts 1 nach innen bewegen. An den Drehpunkten 31, 32 übertragen sich die Zugkräfte auf die Seitenteile 5, 6, so dass diese nach innen verschwenkt werden.

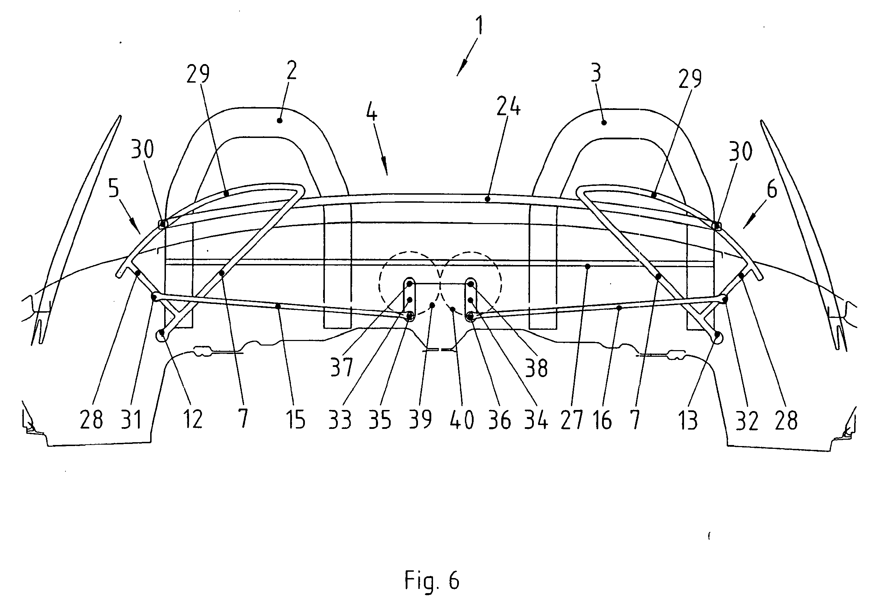

Dies ist in der Fig. 6 näher dargestellt. Fig. 6 zeigt eine schematische Darstellung des Windschotts 1 in einer Zwischenstellung zwischen seiner Wirk- und Ruhestellung. Die die Wirkflächen 9-11 und die Flächengebilde der Seitenteile 5, 6 und des Mittelteils 4 kenntlich machenden Schraffuren sind in der Fig. 6 aus Übersichtlichkeitsgründen weggelassen. Die Antriebsglieder 33 und 34 wurden um ca. 45° gegen den bzw. im Uhrzeigersinn gedreht und verlaufen hier nahezu vertikal. Die Drehungen der Antriebsglieder 33, 34 haben sich. über die Gestänge 15, 16 auf die Seitenteile 5, 6 übertragen. Die beiden Seitenteile 5, 6 sind mit einer Rotationsbewegung nach innen verschwenkt. Die Kulissensteine 30 sind in den als Führungen ausgestalteten Rahmenelementen 29 in Richtung der Verbindungsstellen zwischen den Rahmenelementen 29 und den Stegen 28 verschoben. Die Rahmenleiste 24 des Mittelteils 4 ist mit einer Translationsbewegung nach unten gefahren. Das flexible Flächengebilde des Mittelteils 4 wird bei der Bewegung der Rahmenleiste 24 nach unten auf die Rolloachse 27 aufgewickelt.

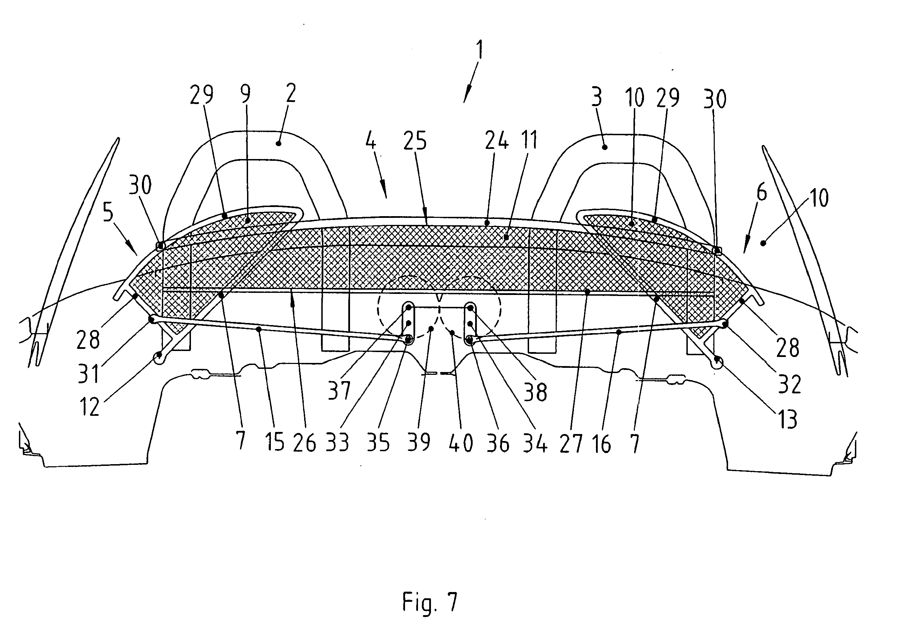

Fig. 7 zeigt eine schematische Darstellung des Windschotts 1 in der Zwischenstellung nach Fig. 6. In der Fig. 7 sind die Schraffuren der Flächengebilde der Seitenteile 5, 6 und des Mittelteils 4 eingezeichnet.

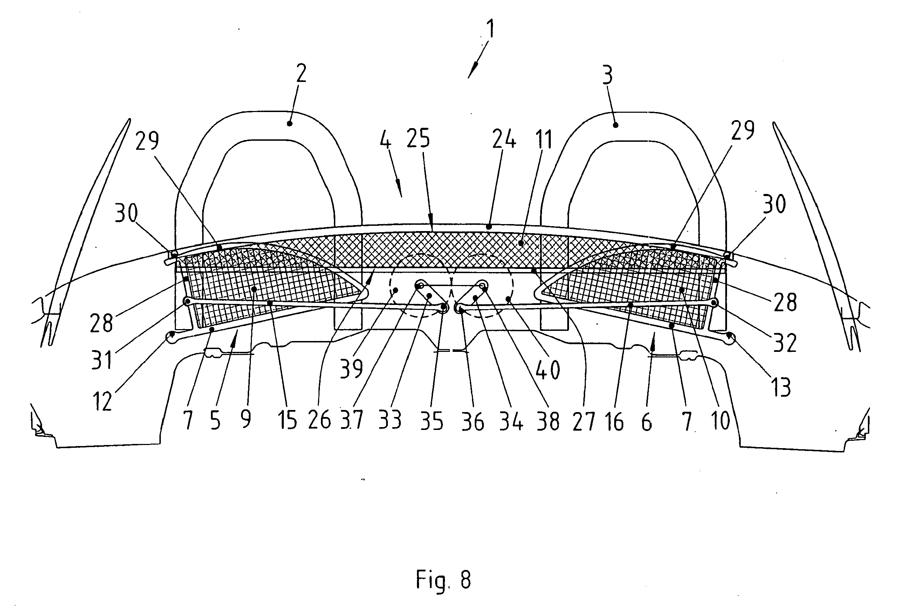

Fig. 8 zeigt eine schematische Darstellung des Windschotts 1 nach Fig. 5, das sich hier in seiner Ruhestellung befindet. Die Antriebsglieder 33, 34 wurden aus ihren Positionen nach Fig. 6 weiter gedreht und bilden zu der Vertikalen einen Winkel von ca. 45°. Gegenüber der Wirkstellung wurden die Antriebsglieder 33 und 34 um ca. 90° gegen den bzw. im Uhrzeigersinn gedreht, um das Windschott 1 in die Ruhestellung zu bringen. Die Seitenteile 5, 6 sind nun vollständig nach unten verschwenkt und die Rahmenleiste 24 des Mittelteils 4 wurde mit der Bewegung der Seitenteile 5, 6 nach unten verfahren. Die Kulissensteine 30 befinden sich an den Enden des bogenförmigen Rahmenelements 29. Das flexible Flächengebilde des Mittelteils 4 ist soweit auf die Rolloachse 29 aufgewickelt, dass nur noch ein schmaler Streifen des Flächengebildes in Querrichtung des Cabriolets aufgespannt ist.

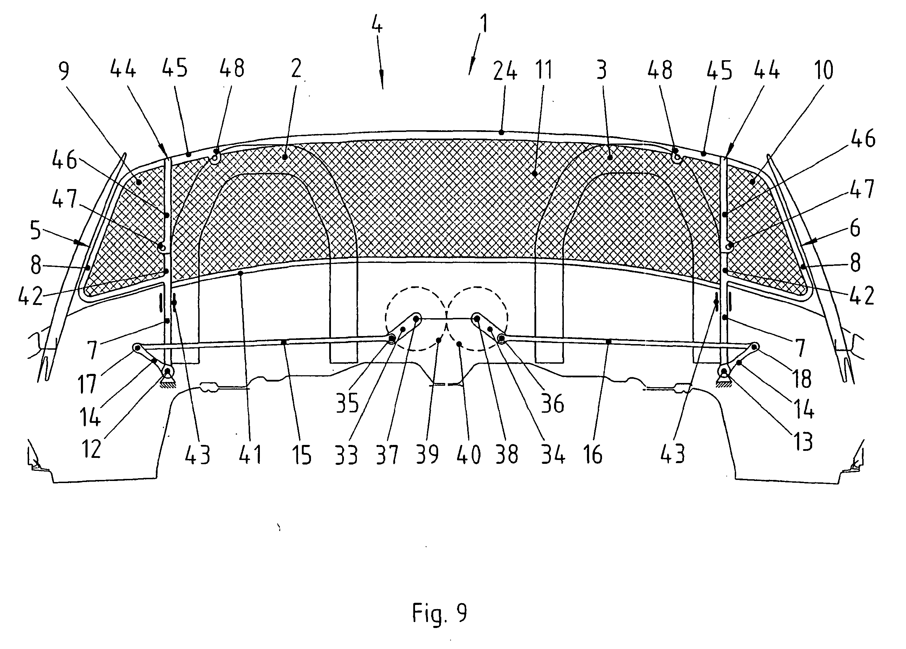

In dem anhand der Fig. 5-9 beschriebenen zweiten Ausführungsbeispiel wurde eine Bewegung zum Absenken des Windschotts 1 aus seiner Wirkstellung nach Fig. 5 in seine Ruhestellung nach Fig. 9 beschrieben. Es ist mittels eines umgekehrten Antreibens der Antriebsglieder 33 und 34 in bzw. entgegen der Richtung des Uhrzeigersinns möglich, das Windschott 1 aus seiner Ruhestellung in seine Wirkstellung aufzustellen.

Fig. 9 zeigt eine schematische Darstellung eines dritten Ausführungsbeispiels des mehrteiligen Windschotts 1. Das Windschott 1 befindet sich in der Darstellung nach Fig. 9 in seiner Wirkstellung und ist hinter den Überrollbügeln 2, 3 aufgestellt. Der Mittelteil 4 des Windschotts 1 weist einen kompletten Rahmen auf, in dem das Flächengebilde des Mittelteils 4 aufgespannt ist. Der Rahmen des Mittelteils 4 umfasst hier ebenfalls die obere, längliche Rahmenleiste 24. An der nach unten weisenden Seite der Rahmenleiste 24 ist die obere Kante 25 des Flächengebildes des Mittelteils 4 befestigt. Der Mittelteil 4 weist ferner eine im Wesentlichen parallel zu der oberen Rahmenleiste 24 verlaufende untere Rahmenleiste 41 auf, die gegenüber der Rahmenleiste 24 nach unten versetzt angeordnet ist, so dass zwischen der oberen Rahmenleiste 24 und der unteren Rahmenleiste 41 in vertikaler Richtung ein bestimmter fester Abstand gegeben ist. Dieser Abstand bestimmt die vertikale Ausbreitung der Wirkfläche 11 des Mittelteils 4. Die Enden der oberen Rahmenleiste 24 und der unteren Rahmenleiste 41 sind über zwei vertikal verlaufende, längliche Rahmenelemente 42 zu beiden Seiten des Mittelteils 4 miteinander verbunden. Das Flächengebilde des Mittelteils 4 ist ebenfalls an den nach innen weisenden Seiten dieser Rahmenelemente 42 befestigt. Die beiden Rahmenelemente 42 sind in Führungen 43 geführt, die ein Verfahren des Mittelteils 4 in vertikaler Richtung erlauben.

Das Windschott 1 gemäß dem dritten Ausführungsbeispiel weist eine Kopplung zwischen den beiden Seitenteilen 5, 6 und dem Mittelteil 4 auf, die hier mit Lenkern 44 zu beiden Seiten des Windschotts 1 realisiert sind. Die Lenker 44 weisen jeweils zwei Lenkerarme 45 und 46 auf. Zwei Enden der Lenkerarme 45, 46 sind in einem bestimmten Winkel miteinander verbunden. Dieser bestimmte Winkel stimmt mit demjenigen Winkel überein, in dem eines der Enden der oberen Rahmenleiste 24 mit einem der länglichen Rahmenelemente 42 verbunden ist. In der Wirkstellung des Windschotts 1 liegen die Lenker 44 somit genau parallel zu einem Teil der Rahmenelemente 42 und einem Teil der Rahmenleiste 24. Im vorliegenden Ausführungsbeispiel beträgt der bestimmte Winkel ein wenig mehr als 90°. Die Lenkerarme 45 der beiden Lenker 44 sind an ihren anderen Enden drehbar an den Holmen 7 der beiden Seitenteile 5, 6 befestigt. Dadurch sind Drehpunkte 47 festgelegt. Die Lenkerarme 46 der beiden Lenker 44 sind an ihren anderen Enden drehbar an der Rahmenleiste 24 befestigt. Dadurch sind Drehpunkte 48 festgelegt.

An den unteren Enden der Holme 7 der beiden Seitenteile 5, 6 sind, wie im ersten Ausführungsbeispiel die Kopplungsglieder 14 angebracht, die drehbar an den Gestängen 15, 16 befestigt sind. Die Gestänge 15, 16 sind ferner, wie bereits im zweiten Ausführungsbeispiel beschrieben, an den beiden Antriebsgliedern 33, 34 befestigt und werden über diese, wie zuvor beschrieben, bewegt.

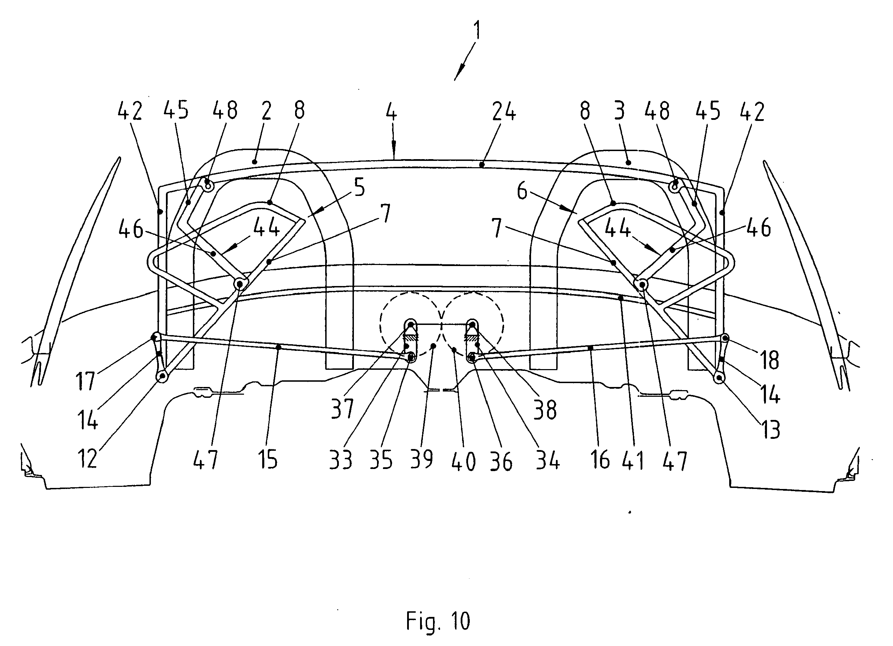

Fig. 10 zeigt eine schematische Darstellung des Windschotts 1 nach Fig. 9 in einer Zwischenstellung zwischen seiner Wirk- und Ruhestellung. Die die Wirkflächen 9-11 und die Flächengebilde der Seitenteile 5, 6 und des Mittelteils 4 kenntlich machenden Schraffuren sind in der Fig. 10 aus Übersichtlichkeitsgründen erneut weggelassen. Die Antriebsglieder 33 und 34 wurden um ca. 45° gegen den bzw. im Uhrzeigersinn gedreht und verlaufen nun nahezu vertikal. Die Drehungen der Antriebsglieder 33, 34 haben sich über die Gestänge 15, 16 und die Kopplungsglieder 14 auf die Seitenteile 5, 6 übertragen. Die beiden Seitenteile 5, 6 sind nach innen verschwenkt. Die Verschwenkbewegungen der Seitenteile 5, 6 werden über die Lenker 44 auf die obere Rahmenleiste 24 und damit auf den Mittelteil 4 übertragen. Dieser wird aufgrund der Führungen 43, in denen die Rahmenelemente 42 geführt sind, mit einer Translationsbewegung senkrecht nach unten abgesenkt.

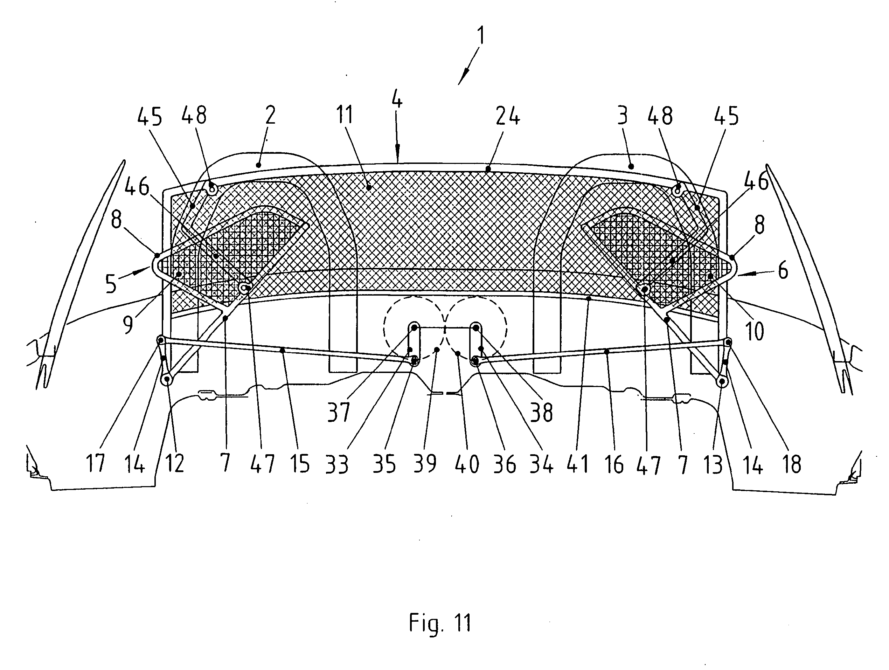

Fig. 11 zeigt eine schematische Darstellung des Windschotts 1 in der Zwischenstellung nach Fig. 10. In der Fig. 11 sind die Schraffuren der Flächengebilde der Seitenteile 5, 6 und des Mittelteils 4 eingezeichnet.

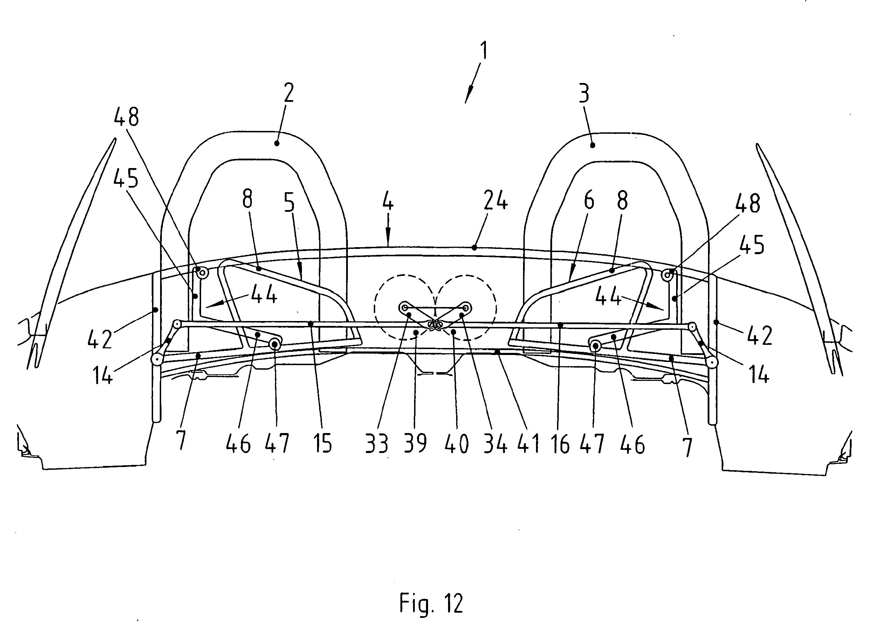

Fig. 12 zeigt eine schematische Darstellung des Windschotts 1 gemäß dem dritten Ausführungsbeispiel, das sich hier in seiner Ruhestellung befindet. Die die Wirkflächen 9-11 und die Flächengebilde der Seitenteile 5, 6 und des Mittelteils 4 kenntlich machenden Schraffuren sind in der Fig. 12 aus Übersichtlichkeitsgründen weggelassen. Die Antriebsglieder 33, 34 wurden aus ihren Positionen nach Fig. 10 weiter gedreht und bilden zu der Vertikalen einen Winkel von ca. 45°. Gegenüber der Wirkstellung wurden die Antriebsglieder 33 und 34 um ca. 90° gegen den bzw. im Uhrzeigersinn gedreht, um das Windschott 1 in die Ruhestellung zu bringen. Die Seitenteile 5, 6 sind nun vollständig nach unten verschwenkt. Der Mittelteil 4 wurde mit der Bewegung der Seitenteile 5, 6 senkrecht nach unten gefahren.

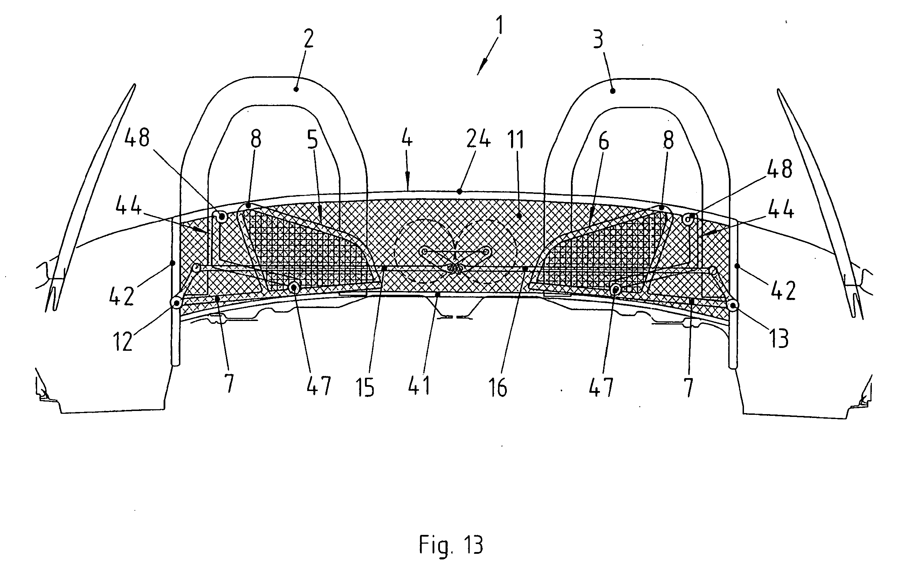

Fig. 13 zeigt eine schematische Darstellung des Windschotts 1 in der Ruhestellung nach Fig. 12. In der Fig. 13 sind die Schraffuren der Flächengebilde der Seitenteile 5, 6 und des Mittelteils 4 wieder eingezeichnet.

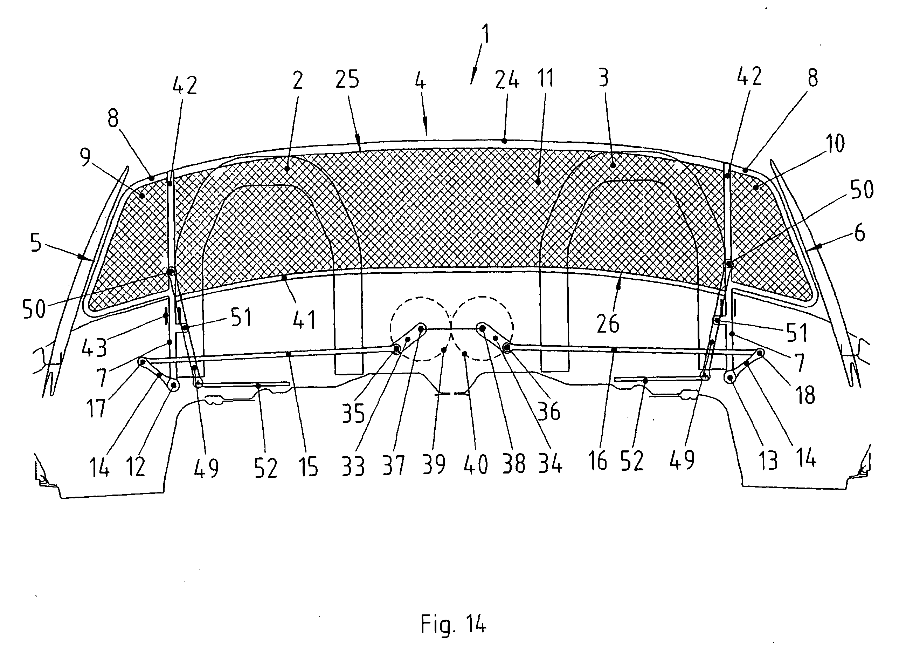

Fig. 14 zeigt eine schematische Darstellung eines vierten Ausführungsbeispiels des mehrteiligen Windschotts 1. Das Windschott 1 befindet sich in der Darstellung nach Fig. 14 in seiner Wirkstellung und ist hinter den Überrollbügeln 2, 3 aufgestellt. Der Mittelteil 4 des Windschotts 1 weist einen Rahmen auf, in dem das Flächengebilde des Mittelteils 4 aufgespannt ist. Der Rahmen des Mittelteils 4 umfasst hier die obere, längliche Rahmenleiste 24 und die untere Rahmenleiste 41, die gegenüber der Rahmenleiste 24 nach unten versetzt angeordnet ist, so dass zwischen der oberen Rahmenleiste 24 und der unteren Rahmenleiste 41 in vertikaler Richtung ein bestimmter Abstand gegeben ist. Die Enden der oberen Rahmenleiste 24 und der unteren Rahmenleiste 41 können über die zwei vertikal verlaufenden, länglichen Rahmenelemente 42 zu beiden Seiten des Mittelteils 4 miteinander verbunden sein. Es ist auch möglich, die beiden Rahmenelemente 42 nicht bis an die Enden der unteren Rahmenleiste 41 verlaufen zu lassen. Insbesondere in diesem Fall ist das Flächengebilde des Mittelteils 4 aus einem steifen Material, wie z. B. Kunststoff oder Mineralglas. Die beiden Rahmenelemente 42 können auch hier in den Führungen 43 geführt sein, die ein Verfahren des Mittelteils 4 in vertikaler Richtung erlauben.

Das Windschott 1 gemäß dem vierten Ausführungsbeispiel weist ebenfalls eine Kopplung zwischen den beiden Seitenteilen 5, 6 und dem Mittelteil 4 auf, die hier mit länglichen Lenkern 49 zu beiden Seiten des Windschotts 1 realisiert sind. Die Lenker 49 sind an einem ihrer Enden drehbar an den Rahmenelementen 42 befestigt. Dadurch sind Drehpunkte 50 gebildet. In etwa in ihrer jeweiligen Mitte sind die Lenker 49 in den unteren Dritteln der Holme 7 drehbar an diesen befestigt. Dadurch sind Drehpunkte 51 gebildet. An ihren anderen Enden sind die Lenker 49 zudem in karosseriefesten, horizontal verlaufenden, insbesondere schlitzförmigen Kulissen 52 verschiebbar gelagert. Dadurch wird beim Verfahren des Windschotts 1 erreicht, dass sich der Mittelteil 4 auf einer vertikalen Geraden bewegt. In der Wirkstellung des Windschotts 1 befinden sich die Enden der Lenker 49 an den in Längsrichtung des Windschotts 1 äußeren Enden der Kulissen 52. Die Anordnungen der Lenker 49 sind im vorliegenden Ausführungsbeispiel vorteilhafterweise in einem unteren Bereich des Windschotts 1 realisiert, so dass sie von außen nicht sichtbar sind.

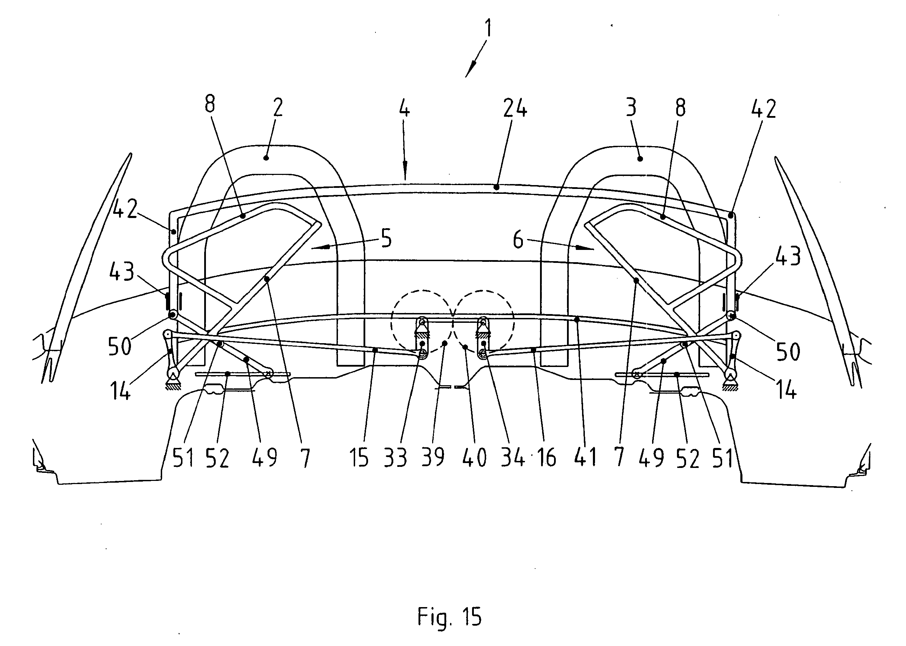

Fig. 15 zeigt eine schematische Darstellung des Windschotts 1 nach Fig. 14 in einer Zwischenstellung zwischen seiner Wirk- und Ruhestellung. Die die Wirkflächen 9-11 und die Flächengebilde der Seitenteile 5, 6 und des Mittelteils 4 kenntlich machenden Schraffuren sind in der Fig. 15 aus Übersichtlichkeitsgründen weggelassen. Drehungen der Antriebsglieder 33, 34 haben sich über die Gestänge 15, 16 und die Kopplungsglieder 14 auf die Seitenteile 5, 6 übertragen. Die beiden Seitenteile 5, 6 sind nach innen verschwenkt. Die Rotationsbewegungen der Seitenteile 5, 6 werden über die Lenker 49 auf die Rahmenelemente 42, und damit auf das Mittelteil 4 übertragen.

Dieses wird aufgrund der Führungen 43 und der Führung der Lenker 49 in den Kulissen 52 senkrecht nach unten abgesenkt.

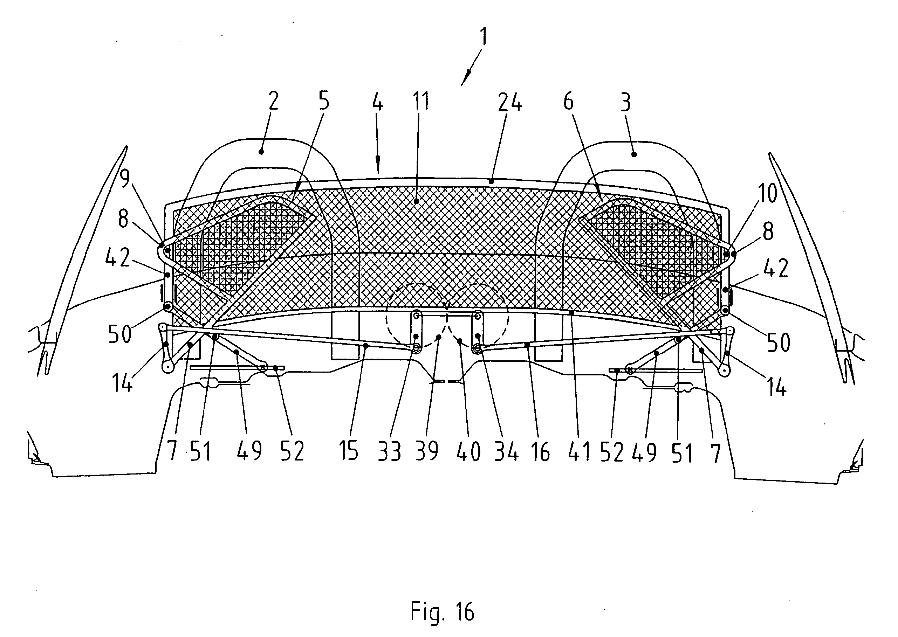

Fig. 16 zeigt eine schematische Darstellung des Windschotts 1 in der Zwischenstellung nach Fig. 15. In der Fig. 16 sind die Schraffuren der Flächengebilde der Seitenteile 5, 6 und des Mittelteils 4 eingezeichnet.

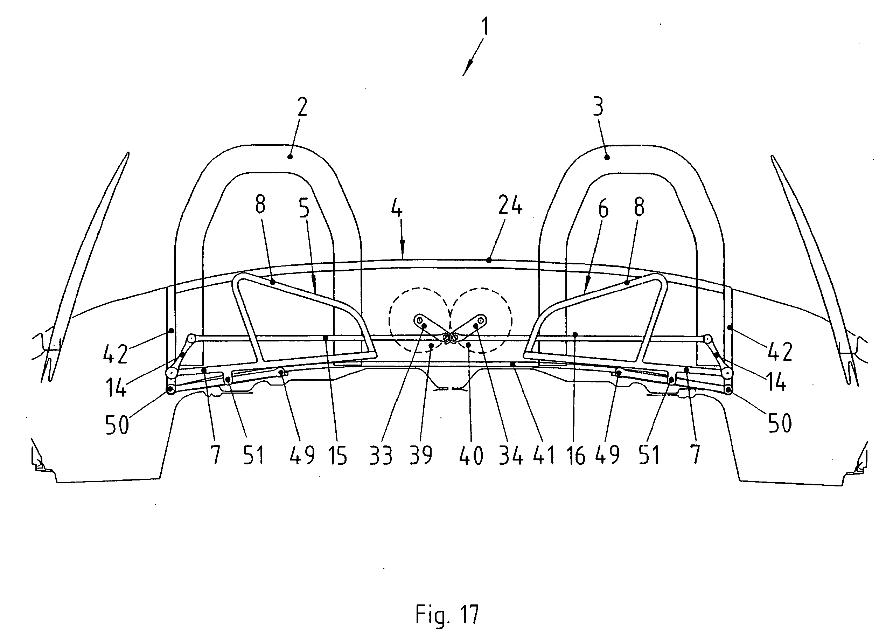

Fig. 17 zeigt eine schematische Darstellung des Windschotts 1 gemäß dem vierten Ausführungsbeispiel, das sich hier in seiner Ruhestellung befindet. Die die Wirkflächen 9-11 und die Flächengebilde der Seitenteile 5, 6 und des Mittelteils 4 kenntlich machenden Schraffuren sind in der Fig. 17 aus Übersichtlichkeitsgründen erneut weggelassen. Die Antriebsglieder 33, 34 wurden weiter gedreht. Gegenüber der Wirkstellung wurden die Antriebsglieder 33 und 34 um ca. 90° gegen den bzw. im Uhrzeigersinn gedreht, um das Windschott 1 in die Ruhestellung zu bringen. Die Seitenteile 5, 6 sind nun vollständig nach unten verschwenkt. Der Mittelteil 4 wurde mit der Bewegung der Seitenteile 5, 6 senkrecht nach unten gefahren.

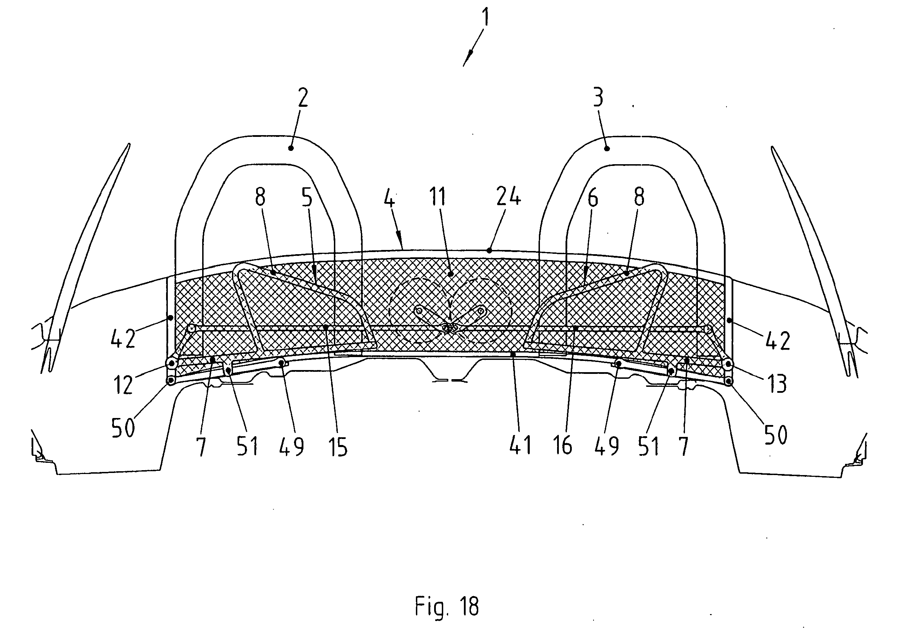

Fig. 18 zeigt eine schematische Darstellung des Windschotts 1 in der Ruhestellung nach Fig. 17. In der Fig. 18 sind die Schraffuren der Flächengebilde der Seitenteile 5, 6 und des Mittelteils 4 wieder eingezeichnet.

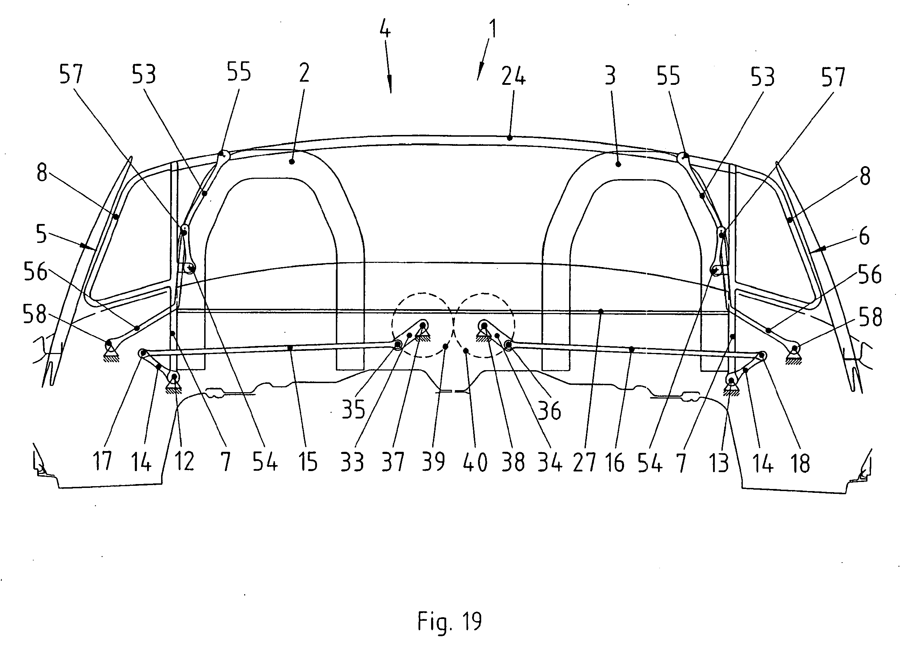

Fig. 19 zeigt eine schematische Darstellung eines fünften Ausführungsbeispiels des mehrteiligen Windschotts 1. Die die Wirkflächen 9-11 und die Flächengebilde der Seitenteile 5, 6 und des Mittelteils 4 kenntlich machenden Schraffuren sind in der Fig. 19 aus Übersichtlichkeitsgründen weggelassen. Das Windschott 1 befindet sich in seiner Wirkstellung und ist insofern hinter den Überrollbügeln 2, 3 aufgestellt. Der Mittelteil 4 des Windschotts 1 weist die obere, längliche Rahmenleiste 24 auf, an deren nach unten weisenden Seite die obere Kante 25 des Flächengebildes des Mittelteils 4 befestigt ist. Wie beim zweiten Ausführungsbeispiel nach den Fig. 5-9 ist der Mittelteil 4 im vorliegenden

Ausführungsbeispiel als Rollo ausgestaltet. Die untere Kante 26 des Flächengebildes des Mittelteils 4 ist dabei an der drehbar gelagerten Rolloachse 27 befestigt, die ortsfest gelagert ist und horizontal verläuft und mit der sich das Flächengebilde des Mittelteils 4 auf- und abwickeln lässt. Die Rolloachse 27 ist nach unten von der Rahmenleiste 24 beabstandet.

Das Windschott 1 gemäß dem fünften Ausführungsbeispiel weist ebenfalls eine Kopplung zwischen den beiden Seitenteilen 5, 6 und dem Mittelteil 4 auf, die hier mit Lenkern 53 zu beiden Seiten des Windschotts 1 realisiert sind. Die Lenker 53 weisen in ihren unteren Dritteln geringfügige Knicke nach außen auf. Die Lenker 53 sind an unteren Enden drehbar an den Holmen 7 der beiden Seitenteile 5, 6 befestigt. Dadurch sind Drehpunkte 54 festgelegt. Die Lenker 53 sind an oberen Enden drehbar an der Rahmenleiste 24 befestigt. Dadurch sind Drehpunkte 55 festgelegt. An den Knicken der Lenker 53 sind Enden weiterer Lenker 56 drehbar befestigt. Dadurch sind Drehpunkte 57 ausgebildet. Die weiteren Lenker 56 weisen ebenfalls Knicke auf, die hier nach unten gerichtet sind. Die anderen Enden der Lenker 56 sind ortsfest und drehbar an der Karosserie des Cabriolets gelagert. Dadurch sind Drehpunkte 58 ausgebildet. Durch die Anordnungen und Ausgestaltungen der Lenker 53 und 56 kann der Mittelteil 4 beim Verfahren des Windschotts 1 eine vertikale Translationsbewegung ausführen, ohne dass eine weitere Linearführung erforderlich ist.

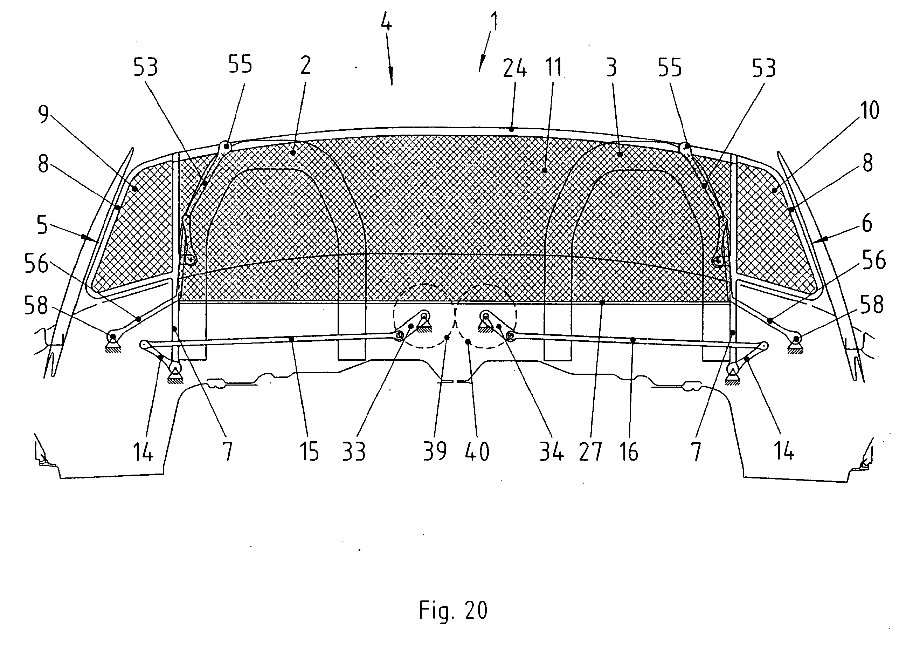

Fig. 20 zeigt eine schematische Darstellung des Windschotts 1 in der Wirkstellung nach Fig. 19. In der Fig. 20 sind die Schraffuren der Flächengebilde der Seitenteile 5, 6 und des Mittelteils 4 eingezeichnet.

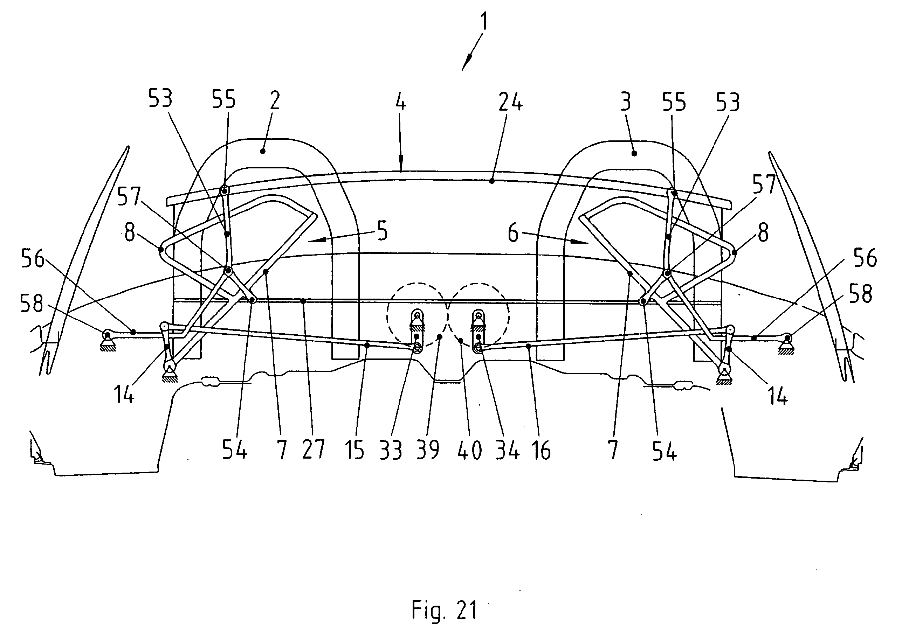

Fig. 21 zeigt eine schematische Darstellung des Windschotts 1 nach Fig. 19 in einer Zwischenstellung zwischen seiner Wirk- und Ruhestellung. Die die Wirkflächen 9-11 und die Flächengebilde der Seitenteile 5, 6 und des Mittelteils 4 kenntlich machenden Schraffuren sind in der Fig. 21 aus Übersichtlichkeitsgründen ebenfalls weggelassen. Drehungen der Antriebsglieder 33, 34 haben sich über die Gestänge 15, 16 und die Kopplungsglieder 14 auf die Seitenteile 5, 6 übertragen. Die beiden Seitenteile 5, 6 sind nach innen verschwenkt. Die Verschwenkbewegungen der Seitenteile 5, 6 werden über die Lenker 53 auf die Rahmenleiste 24 und damit auf das Mittelteil 4 übertragen. Dieses wird aufgrund der Führung durch die Ankopplung der Lenker 53 durch die Lenker 56 vertikal nach unten abgesenkt. Dabei wird das flexible Flächengebilde.des Mittelteils auf die Rolloachse 27 aufgewickelt. In der Fig. 21 ist im linken Bereich des Windschotts 1 ein Punkt I eingezeichnet, der dem linken der Drehpunkte 55 entspricht. Dieser Punkt | fährt beim Verfahren des Windschotts 1 auf einer gestrichelt dargestellten Linie, je nach Verfahrrichtung des Windschotts 1, nach unten oder nach oben.

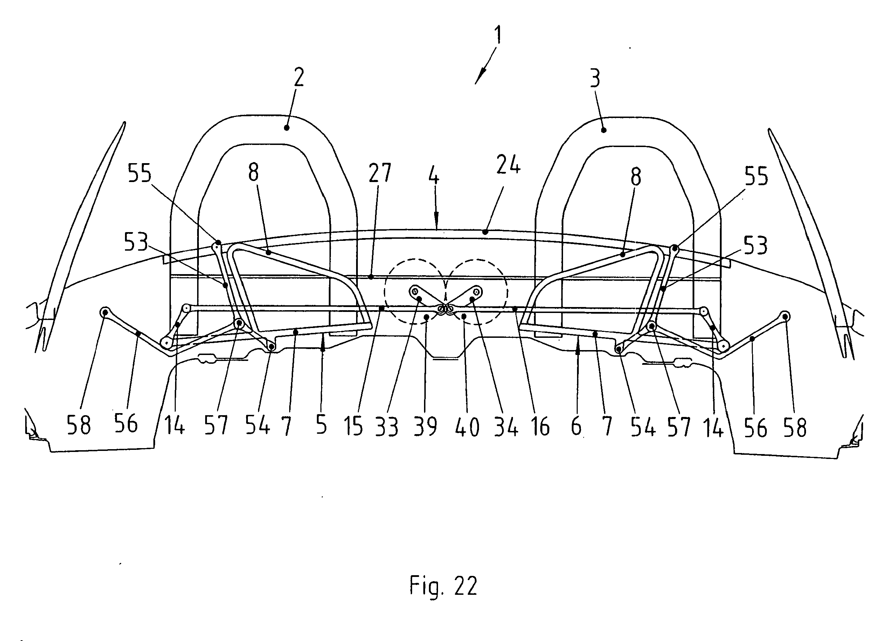

Fig. 22 zeigt eine schematische Darstellung des Windschotts 1 gemäß dem fünften Ausführungsbeispiel, das sich hier in seiner Ruhestellung befindet. Die die Wirkflächen 9-11 und die Flächengebilde der Seitenteile 5, 6 und des Mittelteils 4 kenntlich machenden Schraffuren sind auch in der Fig. 22 aus Übersichtlichkeitsgründen weggelassen. Gegenüber der Wirkstellung wurden die Antriebsglieder 33 und 34 um ca. 90° gegen den bzw. im Uhrzeigersinn gedreht, um das Windschott 1 in die Ruhestellung zu bringen. Die Seitenteile 5, 6 sind nun vollständig nach unten verschwenkt. Die Rahmenleiste 24 des Mittelteils 4 wurde mit der Bewegung der Seitenteile 5, 6 senkrecht nach unten gefahren. Dabei wurde das flexible Flächengebilde auf die Rolloachse 27 aufgewickelt.

Es ist bei dem erfindungsgemäßen Windschott 1 und dem erfindungsgemäßen Cabriolet möglich, die Betätigung des Windschotts 1 mit einem Antrieb eines Verdecks des Cabriolets zu koppeln. Dadurch kann gewährleistet werden, dass das Verdeck ordnungsgemäß öffnen und schließen kann und das Windschott 1 dabei den Weg für ein Verdeckgestänge und/oder einen Dachrahmen freigegeben hat. Beispielsweise kann das in seine Wirkstellung aufgestellte Windschott 1 automatisch in seine Ruhestellung abgesenkt werden, wenn ein geöffnetes Verdeck geschlossen werden soll.

## Patentansprüche

1. Windschott (1) für ein Cabriolet mit einem Betätigungsmittel (14, 15, 16, 19; 33, 34) zum Betätigen des Windschotts (1), um dieses zum Gewährleisten eines Windschutzes in eine Wirkstellung aufzustellen und ausgehend von seiner Wirkstellung in eine Ruhestellung abzusenken, welches Betätigungsmittel (14, 15, 16, 19; 33, 34) wenigstens ein Gestänge (15,16) aufweist, wobei das Windschott (1) mehrteilig ausgestaltet ist und einen Mittelteil (4) und zwei Seitenteile (5, 6) enthält, die Flächengebilde zum Aufspannen von Wirkflächen (9-11) aufweisen, die zum Gewährleisten des Windschutzes dienen, wobei die beiden Seitenteile (5, 6) mit dem Mittelteil (4) gekoppelt sind, **dadurch gekennzeichnet, dass** ein oberes; längliches Rahmenelement (24) des Mittelteils (4) an seinen beiden Enden verfahrbar in als Führungen ausgestalteten Rahmenelementen (29) der zwei Seitenteile (5, 6) geführt ist.

2. Windschott nach Anspruch 1, **dadurch gekennzeichnet, dass** die Seitenteile (5, 6) schwenkbar gelagert sind.

3. Windschott nach Anspruch 1, **dadurch gekennzeichnet, dass** der Mittelteil (4) so ausgestaltet und angeordnet ist, dass er beim Betätigen des Windschotts (1) eine Translationsbewegung ausführt.

4. Windschott nach Anspruch 1, **dadurch gekennzeichnet, dass** das Betätigungsmittel (15,16; 33, 34) zwei Gestänge (15, 16) aufweist, die an den beiden Seitenteilen (5, 6) angreifen.

5. Windschott nach einem der vorhergehenden Ansprüche 1 oder 4, **dadurch gekennzeichnet, dass** das wenigstens eine Gestänge (15, 16) mit einem Antrieb zum Bewegen des wenigstens einen Gestänges (15, 16) verbunden ist.

6. Windschott nach Anspruch 4 und 5, **dadurch gekennzeichnet, dass** die beiden Gestänge (15,16) mittels einem Kopplungsmechanismus (19; 39, 40) miteinander gekoppelt sind und der Antrieb an dem Kopplungsmechanismus (19; 39, 40) angreift.

7. Windschott nach Anspruch 6, **dadurch gekennzeichnet, dass** der Kopplungsmechanismus (19; 39, 40) in Längsrichtung des Windschotts (1) mittig in dem Windschott (1) angeordnet ist.

8. Cabriolet mit einem Windschott (1) nach einem der vorhergehenden Ansprüche 1 bis 7.

9. Cabriolet nach Anspruch 8, **dadurch gekennzeichnet, dass** es ein Verdeck aufweist, das mittels einer Verdeckbetätigung öffen- und schließbar ist und das Betätigungsmittel (14, 15, 16, 19; 33, 34) des Windschotts (1) mit der Verdeckbetätigung gekoppelt ist.

## Claims

1. Windbreak (1) for a convertible, with an actuation means (14, 15, 16, 19; 33, 34) for actuating the windbreak (1), in order to erect the latter into an active position to ensure wind protection and in order to lower it from its active position into a position of rest, which actuation means (14, 15, 16, 19; 33, 34) has at least one linkage (15, 16), the windbreak (1) being of multi-part configuration and containing a middle part (4) and two side parts (5, 6) which have sheet-like structures for the stretching-open of active surfaces (9-11) serving for ensuring wind protection, the two side parts (5, 6) being coupled to the middle part (4), **characterized in that** an upper elongate frame element (24) of the middle part (4) is guided movably at its two ends in frame elements (29), configured as guides, of the two side parts (5, 6).

2. Windbreak according to Claim 1, **characterized in that** the side parts (5, 6) are mounted pivotably.

3. Windbreak according to Claim 1, **characterized in that** the middle part (4) is configured and arranged such that it executes a translational movement when the windbreak (1) is actuated.

4. Windbreak according to Claim 1, **characterized in that** the actuation means (15, 16; 33, 34) has two linkages (15, 16) which engage on the two side parts (5, 6).

5. Windbreak according to one of the preceding Claims 1 and 4, **characterized in that** the at least one linkage (15, 16) is connected to a drive for moving the at least one linkage (15, 16).

6. Windbreak according to Claims 4 and 5, **characterized in that** the two linkages (15, 16) are coupled to one another by means of a coupling mechanism (19; 39, 40), and the drive engages on the coupling mechanism (19; 39, 40).

7. Windbreak according to Claim 6, **characterized in that** the coupling mechanism (19; 39, 40) is arranged in the windbreak (1) in the middle in the longitudinal direction of the windbreak (1).

8. Convertible having a windbreak (1) according to one of the preceding Claims 1 to 7.

9. Convertible according to Claim 8, **characterized in that** it has a folding top which can be opened and closed by means of folding-top actuation, and the actuation means (14, 15, 16, 19; 33, 34) of the windbreak (1) is coupled to the folding-top actuation.

## Revendications

1. Déflecteur de vent (1) pour un cabriolet avec un moyen d'actionnement (14, 15, 16, 19 ; 33, 34) pour actionner le déflecteur de vent (1), afin de le remonter en vue de garantir une protection contre le vent dans une position active et de le redescendre, à partir de sa position active, dans une position de repos, ledit moyen d'actionnement (14, 15, 16, 19 ; 33, 34) comportant au moins une tige (15, 16), le déflecteur de vent (1) étant réalisé en plusieurs parties et contenant une partie centrale (4) et deux parties latérales (5, 6) comportant une formation superficielle permettant de desserrer les surfaces actives (9-11) pour garantir la protection contre le vent, les deux parties latérales (5, 6) étant couplées à la partie centrale (4), **caractérisé en ce qu'**un élément d'encadrement (24) longitudinal supérieur de la partie centrale (4) est guidé de façon à pouvoir passer au niveau de ses deux extrémités dans des éléments d'encadrement (29) prenant la forme de guides des deux parties latérales (5, 6).

2. Déflecteur de vent selon la revendication 1, **caractérisé en ce que** les parties latérales (5, 6) sont disposées de façon pivotante.

3. Déflecteur de vent selon la revendication 1, **caractérisé en ce que** la partie centrale (4) est configurée et disposée de telle sorte qu'elle réalise un mouvement de translation à l'actionnement du déflecteur de vent (1).

4. Déflecteur de vent selon la revendication 1, **caractérisé en ce que** le moyen d'actionnement (15, 16 ; 33, 34) comporte deux tiges (15, 16) s'engrenant au niveau des deux parties latérales (5, 6).

5. Déflecteur de vent selon l'une quelconque des revendications 1 ou 4, **caractérisé en ce que** l'au moins une tige (15, 16) est reliée à un entraînement pour déplacer l'au moins une tige (15, 16).

6. Déflecteur de vent selon les revendications 4 et 5, **caractérisé en ce que** les deux tiges (15, 16) sont couplées ensemble à l'aide d'un mécanisme de couplage (19 ; 39, 40) et que l'entraînement s'engrène au niveau du mécanisme de couplage (19 ; 39, 40).

7. Déflecteur de vent selon la revendication 6, **caractérisé en ce que** le mécanisme de couplage (19 ; 39, 40) est disposé de façon centrale dans le déflecteur de vent (1) dans la direction longitudinale du déflecteur de vent (1).

8. Cabriolet avec un déflecteur de vent (1) selon l'une quelconque des revendications 1 à 7.

9. Cabriolet selon la revendication 8, **caractérisé en ce qu'**il comporte une capote pouvant être fermée et ouverte à l'aide d'un actionnement de capote et **en ce que** le moyen d'actionnement (14, 15, 16, 19 ; 33, 34) du déflecteur de vent (1) est couplé à l'actionnement de capote.
